# EUROPÄISCHE PATENTSCHRIFT

(11) **EP 1 300 452 B1**
(45) Veröffentlichungstag und Bekanntmachung des Hinweises auf die Patenterteilung: **14.12.2005**
(21) Anmeldenummer: 02020366.7
(22) Anmeldetag: 12.09.2002
(51) Int. Cl.: C09J 7/04, C09J 11/04

(54) **Verfahren zur Ummantelung von langgestrecktem Gut**
Method for sheathing longitudinally extended products
Procédé pour enrober des produits longs

(30) Priorität: 05.10.2001 DE 10149071
(43) Veröffentlichungstag der Anmeldung: 09.04.2003
(73) Patentinhaber: tesa AG, 20253 Hamburg (DE)
(72) Erfinder: von Samson-Himmestjerna, Matthias, 24558 Henstedt-Ulzburg (DE)

(56) Entgegenhaltungen:
- EP-A- 0 685 546
- DE-A- 4 442 507
- US-A- 5 804 510

## Beschreibung

Die Erfindung bezieht sich auf ein Verfahren zur Ummantelung von langgestrecktem Gut, wie insbesondere Kabelsätzen, mit einer textilen Eindeckung.

Die Verwendung von Klebebändern mit einem Vlies als Träger zur Bandagierung von Kabelbäumen ist bekannt. So beschreibt die DE 94 01 037 U1 ein Klebeband mit einem bandförmigen, textilen Träger, der aus einem Nähvlies besteht, das seinerseits aus einer aus einer Vielzahl parallel zueinander laufender, eingenähter Nähte gebildet wird. Das beschriebene Klebeband zeigt bei seiner Verwendung zur Kabelbaumbandagierung aufgrund seiner speziellen Ausführung Geräuschdämmungseigenschaften.

Neben dem in der DE 94 01 037 U1 erwähnten Nähvlies gibt es weitere Träger, die in Klebebändern zur Kabelbaumbandagierung eingesetzt werden.
Die DE 44 42 092 C1 beschreibt solch ein Klebeband auf Nähvliesbasis, das auf der Trägerrückseite beschichtet ist. Der DE 44 42 093 C1 liegt die Verwendung eines Vlieses als Träger für ein Klebeband zugrunde, das durch die Bildung von Maschen aus den Fasern des Vlieses verstärktes Querfaservlies entsteht, also ein dem Fachmann unter dem Namen Malivlies bekanntes Vlies. Die DE 44 42 507 C1 offenbart ein Klebeband zur Kabelbandagierung, jedoch basiert es auf sogenannten Kunit- beziehungsweise Multiknitvliesen.

Aus der DE 195 23 494 C1 ist die Verwendung eines Klebebandes mit einem Träger aus Vliesmaterial zum Bandagieren von Kabelbäumen bekannt, das einseitig mit einem Kleber beschichtet ist. Bei dem erfindungsgemäß zum Einsatz kommenden Vlies handelt es sich um ein Spinnvlies aus Polypropylen, das mit Hilfe eines Kalanders thermisch verfestigt und geprägt ist, wobei die Prägewalze eine Prägefläche von 10 % bis 30 %, bevorzugt 19 %, aufweist.

Mit der DE 298 04 431 U1 wird ebenfalls die Verwendung eines Klebebandes mit einem Träger aus Vliesmaterial zum Bandagieren von Kabelbäumen offenbart, wobei das vorgeschlagene Spinnvlies aus Polyester besteht.

Aus der DE 298 19 014 U1 sind Klebebänder auf Basis eines mit Luft- und/oder Wasserstrahlen verfestigten Vliesen bekannt.

Aus der DE 199 23 399 A1 ist ein Klebeband mit einem bandförmigen Träger aus Vliesmaterial bekannt, das zumindest einseitig mit einem Kleber beschichtet ist, wobei das Vlies ein Stapelfaservlies darstellt, das durch mechanische Bearbeitung verfestigt oder naßgelegt wird. Zwischen 2 % und 50 % der Fasern des Vlieses sind Schmelzfasern, und zwar solche aus Homo-, Copolymer- oder Bikomponentenfasern mit einem niedrigeren Erweichungs- oder Schmelzpunkt.
Beispielhaft erwähnt ist, daß die Schmelzfasern des Vlieses aus Polypropylen, Polyethylen, Polyamid, Polyester oder Copolymeren bestehen.

Ein weiteres Klebeband mit einem bandförmigen Träger aus Vliesmaterial ist in der DE 199 37 446 A1 offenbart. Das Klebeband ist zumindest einseitig mit einem Kleber beschichtet, wobei das Vlies ein Stapelfaservlies darstellt, das durch mechanische Bearbeitung verfestigt oder naßgelegt wird. Hier erfolgt die weitere Verfestigung des Stapelfaservlieses durch Zugabe von Bindemitteln, wie zum Beispiel Pulver, Folien, Gitternetze, Bindefasern. Die Bindemittel können in Wasser oder organischen Lösemitteln gelöst sein und/oder als Dispersion vorliegen.
Vorzugsweise kommen die Bindemittel als Bindedispersion wie Elastomere oder wie Duroplaste in Form von Phenol- oder Melaminharzdispersionen, als Dispersion natürlicher oder synthetischer Kautschuke oder als Dispersion von Thermoplasten wie Acrylate, Vinylacetate, Polyurethane, Styrol-Butadien-Systeme, PVC sowie deren Copolymere zum Einsatz.

In WO 99/24518 A1 wird ein Klebeband beschrieben, wobei das Trägermaterial ein Vlies ist, das erst durch die spezifische Auswahl von Fasern oder Filamenten mit einer Feinheit von größer 15 denier sowie durch eine zusätzlich aufextrudierte Folienschicht eine Eignung für die Verwendung von Klebebändern findet.

Mit der DE 197 32 958 A1 ist ein Klebeband zum Ummanteln von langgestrecktem Gut, wie Kabelsätzen oder Kunststoffprofilen, offenbart mit einem durch zwei seitliche Kanten begrenzten bandförmigen Träger, der mindestens auf einer Seite mit einer selbstklebenden Klebeschicht versehen ist, die aus einem Haftklebstoff besteht. Der Haftklebstoff weist eine derartige chemische Zusammensetzung auf, daß sich bei Vorhandensein eines leichten Anpreßdruckes auf zwei aufeinander liegenden Klebeschichten unter Auflösung der Grenzflächen und vollständiger Koaleszenz der Klebeschichten eine homogene Haftklebstoff-Masse bildet.
Des weiteren umfaßt die hier dargestellte Erfindung ein Verfahren zum Ummanteln des langgestreckten Gutes. Danach wird das langgestreckte Gut in Längsrichtung im Bereich eines Abschnittes des Klebebandes auf einer mit einer selbstklebenden Klebeschicht versehenen Seite eines bandförmigen Trägers des Klebebandes positioniert und danach das Klebeband derart verklebt, daß mindestens zwei Klebebereiche des bandförmigen Trägers auf der mit der Klebeschicht versehenen Seite derart gegeneinander geklebt werden, daß unter Auflösung von Grenzflächen der Klebeschicht eine homogene Masse entsteht.
Es ergibt sich somit ein aus dem ummantelten Gut herausragendes Fähnchen, das gerade bei den eng bemessenen Platzverhältnissen im Automobilbau äußert unerwünscht ist und das Gefährdungspotential beinhaltet, daß beim Durchziehen des Kabelsatzes durch begrenzte Öffnungen oder Durchführungen zum Beispiel in der Karosserie die Ummantelung hängen bleibt und abreißt, zumindest aber die Umhüllung beschädigt. Dies gilt es zu vermeiden.

Des weiteren weisen die meisten aus dem Stand der Technik bekannten Lösungsvorschläge, insbesondere das zur Längsummantelung fähige Klebeband nach DE 197 32 958 A1 den Nachteil auf, daß zum Ablängen in verwendungsfähige Stücklängen Verarbeitungshilfen wie Scheren, Cuttern oder Dispensem benutzt werden müssen, was zu negativen Auswirkungen im Verarbeitungsprozeß beiträgt, oder aber nur unter vergleichsweise hohem Kraftaufwand handeinreißbar sind. Insbesondere wenn der Verwender am Tage viele kurze einzelne Abschnitte benötigt, also oft das Klebeband mit seinen Fingern durchtrennen muß, kommt es schnell zu Ermüdungserscheinungen.

Sodann weisen moderne Kabelbäume sehr viele Abzweigungen auf, die weitgehend in gleichmäßigen Abständen von Stammbaum abgehen, so daß eine Ummantelung des Stammbaums von Abzweig zu Abzweig erfolgen muß.
Aufgrund der Handarbeit läßt sich nicht vermeiden, daß, obwohl eher gleichlange Abschnitte des Ummantelungsgutes erforderlich sind, der Verwender unterschiedlich lange Stücke ablängt, die teilweise zu kurz sind, also nicht die gesamte Länge zwischen zwei Abzweigungen bedecken, was ein zweites Stück erfordert, oder die teilweise zu lang sind, so daß ein zweites Abtrennen des überstehenden Stücks notwendig ist, bevor das nunmehr an die erforderliche Länge angepaßte Stück eingesetzt werden kann.

Die EP 0 685 546 A1 sowie die US 5,804,510 A offenbaren ein einseitig beschichtetes Klebeband mit einem Gewebeträger. Das Klebeband kann verwendet werden, um Kabelbäume zu umwickeln.

Der vorliegenden Erfindung liegt die Aufgabe zugrunde, eine Ummantelung zur Verfügung zu stellen, die die besonders einfache, preiswerte und schnelle Ummantelung von langgestrecktem Gut ermöglicht, so daß die Nachteile des Standes der Technik nicht oder zumindest nicht in dem Umfang auftreten.

Gelöst wird diese Aufgabe durch eine Ummantelung, wie es im Hauptanspruch niedergelegt ist. Gegenstand der Unteransprüche sind dabei vorteilhafte Weiterbildungen der Ummantelung, Verfahren zur Anwendung der Ummantelung sowie ein unter Verwendung der erfindungsgemäßen Ummantelung ummantelter Kabelbaum.

Demgemäß betrifft die Erfindung eine Ummantelung zum Ummanteln von langgestrecktem Gut, wie insbesondere Kabelsätzen, mit einer bevorzugt textilen Eindeckung, bei der auf zumindest einem im Vergleich zur Breite der Eindeckung schmalen Kantenbereich der Eindeckung ein selbstklebend ausgerüstetes Klebeband vorhanden ist, das so auf der Eindeckung verklebt ist, daß sich das Klebeband über eine der Längskanten der Eindeckung erstreckt, wobei die textile Eindeckung und das Klebeband im wesentlichen rechtwinklig zur Laufrichtung ein oder mehrere Schwächungslinien aufweisen, so daß die Ummantelung leichter handeinreißbar ist.

In einer ersten vorteilhaften Ausführungsform der Erfindung weist die Ummantelung auf einem im Vergleich zur Breite der Eindeckung schmalen Kantenbereich der Eindeckung ein zweites selbstklebend ausgerüstetes Klebeband auf, das so auf der Eindeckung verklebt ist, daß sich das Klebeband über die andere der beiden Längskanten der Eindeckung erstreckt, wobei das zweite Klebeband im wesentlichen rechtwinklig zur Laufrichtung ein oder mehrere Schwächungslinien aufweist, die so vorhanden sind, daß diese deckungsgleich mit den Schwächungslinien in der textilen Eindeckung und dem ersten Klebeband angeordnet sind.

In einer weiteren vorteilhaften Ausführungsform der Erfindung sind die beiden Klebebänder auf der Oberseite der Eindeckung angeordnet.

Es hat sich auch als hervorragend geeignet herausgestellt, wenn das eine Klebeband auf der Oberseite der Eindeckung und das andere Klebeband auf der Unterseite der Eindeckung angeordnet ist.

Um die Handeinreißbarkeit weiter zu verbessern, erstrecken sich in einer bevorzugten Ausführungsform der Erfindung die Schwächungslinien über die gesamte Breite des ersten Klebebands, des zweiten Klebebands und/oder der textilen Eindeckung.

Um ein besonders einfaches Arbeiten für den Anwender zu ermöglichen, sind die Schwächungslinien rechtwinklig zur Laufrichtung der Ummantelung ausgerichtet und/oder in regelmäßigen Abständen angeordnet.

Besonders einfach läßt die Ummantelung durchtrennen, wenn die Schwächungslinien in Form von Perforationen ausgestaltet sind.
Es lassen sich auf diese Weise Kanten zwischen den einzelnen Abschnitten erzielen, die sehr fusselfrei sind, also ein unerwünschtes Ausfransen vermieden wird.

Besonders vorteilhaft lassen sich die Schwächungslinien diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.
Weitere Möglichkeiten stellen gesteuert intermittierend arbeitende Schneidtechnologien dar wie beispielsweise die Verwendung von Lasern, Ultraschall, Hochdruckwasserstrahlen etc. Wird wie beim Laser- oder Ultraschallschneiden ein Teil der Energie als Wärme in das Trägermaterial eingebracht, lassen sich im Schneidbereich die Fasern verschmelzen, so daß ein störendes Ausfasern weitestgehend vermieden wird und man randscharfe Schneidkanten erhält. Letztere Verfahren eignen sich auch, um spezielle Schneidkantengeometrein zu erzielen, beispielsweise konkav oder konvex ausgeformte Schneidkanten.

Die Höhe der Stachel beziehungsweise Messer auf den Stanzwalzen beträgt bevorzugt 150 % der Summe aus Dicke Klebeband plus Dicke Eindeckung.

Das Loch-Steg-Verhältnis bei der Perforierung, also wieviel Millimeter hält das Material zusammen ("Brücke"), wieviel Millimeter sind durchgetrennt, bestimmt, wie leicht insbesondere die Fasern des Trägermaterials einzureißen sind. Des weiteren beeinflußt dies Verhältnis letztlich auch, wie fusselfrei die Abrißkante zu erhalten ist.
Vorzugsweise beträgt die Stegbreite ungefähr 2 mm und die Schnittbreite zwischen den Stegen ungefähr 10 mm, d. h., es wechseln sich 2 mm breite Stege mit 10 mm Einschnitten ab. Das Loch-Steg-Verhältnis beträgt demgemäß vorzugsweise 2:10.
Mit dieser Schwächung des Materiales läßt sich eine ausreichend geringe Abreißkraft erzielen.

Die erfindungsgemäße Ummantelung ist vorteilhaft zum Ummanteln von langgestrecktem Gut, wie insbesondere Kabelsätzen, mit einer textilen Eindeckung zu verwenden, wobei das langgestreckte Gut in axialer Richtung von der Eindeckung umhüllt wird und wobei in axialer Richtung des Gutes auf zumindest einem im Vergleich zur Breite der Eindeckung schmalen Kantenbereich der Eindeckung ein selbstklebend ausgerüstetes Klebeband vorhanden ist. Das Klebeband ist dabei so auf der Eindeckung verklebt, daß sich das Klebeband über die Längskante der Eindeckung erstreckt. Die Umhüllung des Gutes mit der Eindeckung erfolgt so, daß das selbstklebend ausgerüstete Klebeband im wesentlichen auf der Eindeckung selbst verklebt.
Die textile Eindeckung und das Klebeband weisen im wesentlichen rechtwinklig zur Laufrichtung ein oder mehrere Schwächungslinien auf, so daß die Ummantelung leichter handeinreißbar ist

In einer weiteren vorteilhaften Ausführungsform ist ein einseitig selbstklebend ausgerüstetes Klebeband vorhanden, das so auf der Eindeckung verklebt ist, daß bezogen auf die Mittelachse des Gutes die Klebemasse innenwärts liegt.

In einer weiteren vorteilhaften Ausführungsform ist ein einseitig selbstklebend ausgerüstetes Klebeband vorhanden, das so auf der Eindeckung verklebt ist, daß bezogen auf die Mittelachse des Gutes die Klebemasse außenwärts liegt.

Weiterhin hat es sich als vorteilhaft herausgestellt, wenn das einseitig selbstklebend ausgerüstete Klebeband so auf dem ersten Kantenbereich der Eindeckung verklebt ist, daß bezogen auf die Mittelachse des Gutes die Klebemasse innenwärts liegt, und wenn ein zweites selbstklebend ausgerüstetes Klebeband so auf dem zweiten Kantenbereich der Eindeckung verklebt ist, daß bezogen auf die Mittelachse des Gutes die Klebemasse außenwärts liegt, wobei die Umhüllung des Gutes so erfolgt, daß die beiden Klebebänder jeweils auf der Eindeckung verkleben, wobei das zweite Klebeband im wesentlichen rechtwinklig zur Laufrichtung ein oder mehrere Schwächungslinien aufweist, die so vorhanden sind, daß diese deckungsgleich mit den Schwächungslinien in der textilen Eindeckung und dem ersten Klebeband angeordnet sind.

Ebenfalls für den Fachmann unerwartet ergeben sich viele Vorzüge, wenn das einseitig selbstklebend ausgerüstete Klebeband so auf dem ersten Kantenbereich der Eindeckung verklebt ist, daß bezogen auf die Mittelachse des Gutes die Klebemasse innenwärts liegt, und wenn ein zweites selbstklebend ausgerüstetes Klebeband so auf dem zweiten Kantenbereich der Eindeckung verklebt ist, daß bezogen auf die Mittelachse des Gutes die Klebemasse innenwärts liegt, wobei die Umhüllung des Gutes so erfolgt, daß das erste Klebeband auch auf dem Gut und das zweite Klebeband im wesentlichen auf der Eindeckung verklebt.
Das erste Klebeband, das zur leichten Fixierung der Ummantelung auf dem Gut dient, kann eine schmalere Breite aufweisen als das zweite Klebeband, das die Ummantelung auf der Eindeckung verklebt.

Ebenso mit überraschenden Vorteilen behaftet ergibt sich eine weitere Form eines derartigen Umhüllungsbandes, bei dem das erste Klebeband beidseitig selbstklebend ist und somit aktive Verklebungsflächen sowohl innen- als auch außenwärts gerichtet aufweist. Das zweite Klebeband, auch dieses kann ein beidseitig klebend ausgerüstetes Klebeband sein, ist so auf dem zweiten Kantenbereich der Eindeckung positioniert, daß bezogen auf die Mittelachse des Gutes die Klebemasse innenwärts liegt.

Die Umhüllung des Gut erfolgt so, daß die eine Seite des doppelseitig selbstklebenden Klebebandes eine Fixierung des Umhüllungsbandes auf dem Gut ermöglicht, während die zweite Seite des doppelseitig selbstklebenden Klebebandes sowie das zweite Klebeband für die Verklebung auf der Eindeckung oder Klebemasse auf Klebemasse zur Verfügung stehen.

Die Umhüllung des Gutes kann für die einseitig mit Klebeband ausgerüstete Ausführungsform so erfolgen, daß die Klebemasse des Klebebands
- nur auf der Eindeckung verklebt wird,
- jeweils zu einem Teil auf der Eindeckung und zu einem Teil auf dem Gut verklebt wird oder
- jeweils zu einem Teil auf der Eindeckung verklebt wird und zu einem Teil zunächst offen gelassen wird, um später eine Fixierung, zum Beispiel an Karosserieblechen, zu erreichen.

Die Umhüllung des Guts kann für die beidseitig mit jeweils einseitig selbstklebendem Klebeband ausgerüstete Ausführungsform so erfolgen, daß die Klebemassen der beiden Klebebänder
- jeweils zu einem Teil auf der Eindeckung verkleben und zu einem Teil auf sich selbst verkleben
- nur auf der Eindeckung verkleben.

Die Umhüllung des Guts kann für die beidkantig mit Klebeband ausgerüstete Ausführungsform, wobei zumindest ein Klebeband eine beidseitige selbstklebende Beschichtung aufweist, so erfolgen, daß die Klebemassen, die nicht zur Verklebung direkt auf dem Gut verwendet werden,
- jeweils nur auf der Eindeckung verkleben
- jeweils zum einen Teil auf der Eindeckung verkleben und zum anderen Teil auf sich selbst verkleben.

Vorzugsweise erfolgt die Verklebung des oder der Klebebänder derart, daß eine 50 %ige Überlappung des Klebebands mit der Eindeckung vorhanden ist.

Als Eindeckung und/oder Trägermaterial für das Klebeband können alle bekannten textilen Träger wie Gewebe, Gewirke oder Vliese verwendet werden, wobei unter "Vlies" zumindest textile Flächengebilde gemäß EN 29092 (1988) sowie Nähwirkvliese und ähnliche Systeme zu verstehen sind. Dabei müssen Eindeckung und Trägermaterial nicht zwangsläufig aus den gleichen Materialien bestehen.

Ebenfalls können Abstandsgewebe und -gewirke mit Kaschierung verwendet werden.
Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.
Die durch die Partikelschicht hindurchgenadelten Haltefasern halten die Deckschicht und die Unterlagsschicht in einem Abstand voneinander und sie sind mit der Deckschicht und der Unterlagsschicht verbunden.
Abstandsgewebe oder -gewirke sind u. a. in zwei Artikeln beschrieben, und zwar
einem Artikel aus der Fachzeitschrift "kettenwirk-praxis 3/93", 1993, Seiten 59 bis 63 "Raschelgewirkte Abstandsgewirke"
und
einem Artikel aus der Fachzeitschrift "kettenwirk-praxis 1/94", 1994, Seiten 73 bis 76 "Raschelgewirkte Abstandsgewirke"
auf deren Inhalt hiermit Bezug genommen wird und deren Inhalt Teil dieser Offenbarung und Erfindung wird.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozeßführung ausschließlich oder zumindest überwiegend auf Faserknotenpunkte beschränken, so daß unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.
Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Ober- als auch auf der Unterseite eine Verfestigung erfährt.
Schließlich sind auch Nähvliese als Vorprodukt geeignet, eine erfindungsgemäße-Eindeckung und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Weiterhin besonders vorteilhaft ist ein Stapelfaservlies, das im ersten Schritt durch mechanische Bearbeitung vorverfestigt wird oder das ein Naßvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.
Ein derartiges Vlies ist dadurch gekennzeichnet, daß die Fasern naß gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder naßgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.
Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.
Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozeßschritt erfolgen, wobei dieser inline oder off-line durchgeführt werden kann. Nach der Bindemittelzugabe muß temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, daß das Bindemittel nach Ende des Vlies-Herstellprozesses seine Klebrigkeit verloren hat. Vorteilhaft ist, daß durch thermische Behandlung flüchtige Komponenten wie Faserhilfsstoffe entfernt werden und somit ein Vlies mit günstigen Foggingwerten entsteht, so daß bei Einsatz einer foggingarmen Klebemasse ein Klebeband mit besonders günstigen Foggingwerten produziert werden kann, ebenso zeigt somit auch die Eindeckung einen sehr geringen Foggingwert.

Eine weitere Sonderform der adhäsiven Verfestigung besteht darin, daß die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Als Ausgangsmaterialien für den textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Zur Ummantelung des langgestreckten Gutes eignet sich auch eine Eindeckung, die aus Papier, aus einem Laminat, aus einer Folie (zum Beispiel PP, PE, PET, PA, PU), aus Schaumstoff oder aus einer geschäumten Folie besteht.
Die genannten Materialien lassen sich auch vorteilhaft als Trägermaterial für das Klebeband verwenden.

Diese nicht-textilen flächigen Materialien bieten sich insbesondere dann an, wenn spezielle Anforderungen eine derartige Modifikation der Erfindung erfordern. Folien sind zum Beispiel im Vergleich zu Textilien meist dünner, bieten durch die geschlossene Schicht zusätzlichen Schutz vor dem Eindringen von Chemikalien und Betriebsmitteln wie Öl, Benzin, Frostschutzmittel u.ä. in den eigentlichen Kabelbereich und lassen sich über geeignete Auswahl des Werkstoffes den Anforderungen weitgehend anpassen: mit Polyurethanen, Copolymeren aus Polyolefinen lassen sich beispielsweise flexible und elastische Ummantelungen erzeugen, mit Polyester und Polyamiden werden gute Abrieb- und Temperaturbeständigkeiten erreicht.

Schaumstoffe oder geschäumte Folien beinhalten dagegen die Eigenschaft der größeren Raumerfüllung sowie guter Geräuschdämpfung - wird ein Kabelstrang beispielsweise in einem kanal- oder tunnelartigen Bereich im Fahrzeug verlegt, kann durch ein in Dicke und Dämpfung geeignetes Ummantelungsband störendes Klappern und Vibrieren von vornherein unterbunden werden.

Schließlich umfaßt die Erfindung ein mit einer erfindungsgemäßen Ummantelung ummanteltes langgestrecktes Gut, wie insbesondere ein Kabelsatz, wobei das langgestreckte Gut in axialer Richtung von der Eindeckung umhüllt wird und wobei in axialer Richtung des Gutes auf zumindest einem im Vergleich zur Breite der Eindeckung schmalen Kantenbereich der Eindeckung ein selbstklebend ausgerüstetes Klebeband vorhanden ist, das so auf der Eindeckung verklebt ist, daß sich das Klebeband über die Längskante der Eindeckung erstreckt. Die Umhüllung des Gutes mit der Eindeckung erfolgt dabei so, daß das selbstklebend ausgerüstete Klebeband im wesentlichen auf der Eindeckung selbst verklebt.

Die textile Eindeckung und das Klebeband weisen im wesentlichen rechtwinklig zur Laufrichtung ein oder mehrere Schwächungslinien auf, so daß die Ummantelung leichter handeinreißbar ist.

Für den Einsatz bei Kabelbäumen, die im Automobilbau Verwendung finden, sind für die Eindeckung Breiten von 80, 105, 135 mm besonders vorteilhaft, können aber je nach Anwendungsfall variabel hergestellt werden; die Länge richtet sich nach der Ausgestaltung des Kabelbaums.
Das erfindungsgemäße Gesamtprodukt aus Klebeband und Eindeckung, also sämtliche Ausführungsformen der Ummantelung, kann in festen Längen wie zum Beispiel als Meterware oder aber als Endlosware auf Rollen (archimedische Spirale) zur Verfügung gestellt werden. Zur Verklebung kommen insbesondere Streifen des Klebebands zum Einsatz, die eine Breite von 15 bis 50 mm aufweisen.

Zur Herstellung einer besonders vorteilhaften Ummantelung wird eine erste Rolle Klebeband maschinell abgerollt, und das Klebeband der Rolle mit der unbeschichteten textilen Einhüllung zugeführt. Diese zweite Rolle dreht sich derart, daß die Geschwindigkeit des Klebebands und der abzurollenden Einhüllung identisch sind. Das Klebeband wird so auf die eine Kante der Einhüllung aufgelegt, daß das Klebeband zu bevorzugt 50 % auf der Einhüllung verklebt, während die verbleibenden 50 % der Klebemasse des Klebebands sich frei über die besagte Kante hinaus erstrecken.
Die mit dem ersten Klebeband eingedeckte Einhüllung läuft über eine Umlenkrolle.
Eine zweite Rolle Klebeband wird bei Bedarf gleichzeitig abgerollt und der Umlenkrolle zugeführt. Das zweite Klebeband wird auf die andere, die freie Kante der Einhüllung aufgelegt, und zwar ebenfalls so, daß die Überdeckung Klebeband/Einhüllung vorzugsweise 50 % beträgt.
Bedingt durch die Umlenkrolle wird erreicht, daß die beiden Klebemassen um 180° zueinander versetzt liegen.
Vor Aufrollung der Ummantelung erfolgt in einem weiteren Arbeitsschritt die bevorzugte Perforation mittels Stachelwalze. Dieser Arbeitsschritt kann separat oder aus Kostengründen inline über beispielsweise eine mitlaufende Stachel- oder Messerwalze erfolgen.

Diese Herstellung des Verbundproduktes kann entweder über geeignete Dispenser durch den Endverbraucher vor Ort selbst durchgeführt werden oder aber als vorgefertigtes Gesamtsystem als Rollenware zur Verfügung gestellt werden.

Durch die erfinderische Ummantelung des bevorzugten Kabelbaums ist dieser hervorragend geschützt und gegen Erschütterungen gedämpft. Die textile Eindeckung ist leicht, so daß der Kabelbaum nicht sehr an Gewicht zulegt, insbesondere im Vergleich zu den herkömmlichen Methoden der Ummantelung, nämlich ein Klebeband spiralförmig um die gebündelten Kabel zu wickeln, und dehnfähig, so daß der Kabelbaum insgesamt verformbar ist. Er kann somit in schwierigen Lagen den zur Verfügung stehenden Platzverhältnissen hervorragend angepaßt werden.
Durch seinen ursprünglich runden oder ovalen Querschnitt erleichtert der erfindungsgemäße Kabelbaum die störungsfreie Durchführung durch Bohrungen, Löcher, Öffnungen und dergleichen, ermöglicht anschließend eine leichte Verformbarkeit in andere Geometrien und Querschnitte, um sich so den örtlichen Gegebenheiten möglichst ideal anzupassen. So ist selbst ein nahezu flaches Profil für die Verlegeaufgaben zum Beispiel in der Bodengruppe unter dem Teppich möglich, ohne die unterschiedlichen Querschnitte bereits bei der Kabelbaumfertigung einarbeiten zu müssen.

Gegenüber dem bisherigen Spiralwickeln ist eine derartige Längsumhüllung nicht nur einfacher und schneller zu handhaben, sondern durch den Einsatz von Klebebändern nur im Randbereich wird auch Klebemasse gespart.
Neben der Kosteneinsparung reduziert sich auch das Fogging um den Anteil der eingesparten Klebemasse; ebenso vermindern sich die Probleme in der Verträglichkeit zwischen Klebemasse und Kabelummantelung, wie sie insbesondere bei PVC-freien Kabeln und nicht speziell geeigneten Klebemassen auftreten können, da bei der erfindungsgemäßen Längsummantelung keine oder nur eine minimale Kontaktfläche Klebemasse zu Kabelisolierung auftritt.

Als vorteilhaft erweist sich auch, daß in dem Bereich der Ansatzverklebung bis zu drei Lagen Träger übereinanderliegen können; werden besonders hohe Ansprüche an die Dämpfungseigenschaften oder die Abriebfestigkeit gestellt, die sich auf Teilbereiche des Querschnitts beschränken, kann die Überlappungsstelle entsprechend den Anforderungen positioniert werden; die Fläche der Mehrlagigkeit kann leicht durch die Auswahl der Klebebandbreite sowie über die Verklebungstechnik gesteuert werden.

Schließlich verhindert die erfindungsgemäße Art des Einwickelns Faltenwurf.

Bei Verwendung von Ausprägungsformen mit Selbstklebebreichen, die direkt auf dem Gut zur Fixierung genutzt werden, wird neben der Vereinfachung des Ummantelungsvorganges selbst auch weiterhin erreicht, daß die schlauchförmige Umhüllung auf dem Gut, meist Kabelbäume bestehend aus diversen Einzelkabeln, während der Herstellung, des Transportes, der Montage und später während der Dauernutzung gegen Verrutschen, Verschieben und dergleichen gesichert ist.

Die erfindungsgemäße Lösung hat weiterhin die Vorteile, daß es sich um einen sauberen, fähnchenfreien Kabelbaum handelt, welcher einen guten Oberflächenschutz bietet, hohe Bündelungskraft, gute Geräuschdämpfung und bei dicken Kabelsätzen eine sehr hohe Verformbarkeit in Querschnittsrichtung gewährleistet.

Schließlich ist gegenüber den bekannten Systemen die Verarbeitbarkeit deutlich erhöht, insbesondere wenn die Kabelbäume sehr viele Abzweigungen aufweisen, die weitgehend in gleichmäßigen Abständen von Stammbaum abgehen, so daß eine Ummantelung des Stammbaums von Abzweig zu Abzweig erfolgen muß.
Gerade bei Anordnung der Schwächungslinien in gleichmäßigen Abständen lassen gleichlange Abschnitte des Ummantelungsgutes problemlos durch einfaches Ziehen am abgewickelten Gut erzielen. Das Ziehen kann dabei sogar in axialer Richtung erfolgen, so daß die Ummantelung durch reine Zugspannung aufgetrennt wird.
Der Anwender kann ohne hohen Kraftaufwand die in der Länge vorgegebenen Stücke von der Rolle der Ummantelung entnehmen.

Im folgenden soll die Erfindung anhand mehrerer Figuren näher erläutert werden, ohne damit die Erfindung unnötig einschränken zu wollen.

Es zeigen
- Figur 1: eine erfindungsgemäße Ummantelung, bestehend aus einer mit zwei Klebebandabschnitten ausgerüsteten Eindeckung,
- Figur 2: einen Kabelbaum, der erfindungsgemäß ummantelt ist,
- Figur 3: eine mit einem Klebebandabschnitt ausgerüstete Eindeckung mit der Klebemasse nach außen weisend,
- Figur 4: eine mit einem Klebebandabschnitt ausgerüstete Eindeckung mit der Klebemasse nach innen weisend,
- Figur 5: eine zweite erfindungsgemäße Ummantelung, bestehend aus einer mit zwei Klebebandabschnitten ausgerüsteten Eindeckung,
- Figur 6: das mit erfindungsgemäßen Ummantelung aus Figur 5 ummantelte Gut und
- Figur 7: eine weitere erfindungsgemäße Ummantelung, bestehend aus einer mit zwei Klebebandabschnitten ausgerüsteten Eindeckung, wobei ein Klebebandabschnitt zweiseitig klebend ausgerüstet ist.

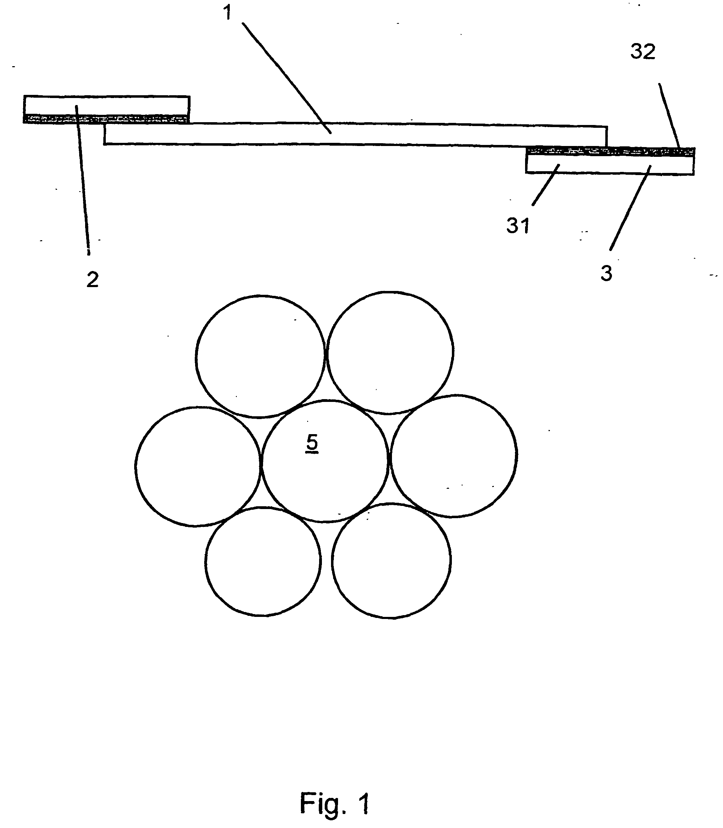

In der Figur 1 ist im Querschnitt eine Ummantelung mit einer textilen Eindeckung 1 gezeigt, die zur Ummantelung von langgestrecktem Gut, insbesondere Kabelsätzen, eingesetzt werden kann.
Ein einseitig selbstklebend ausgerüstetes Klebeband 2 ist so in axialer Richtung des Gutes auf zumindest einem im Vergleich zur Breite der Eindeckung 1 schmalen Kantenbereich der Eindeckung 1 verklebt, daß bezogen auf die Mittelachse des zu ummantelnden Gutes (Kabelbaum 5) die Klebemasse innenwärts liegt. Auf dem zweiten Kantenbereich der Eindeckung 1 ist ein zweites selbstklebend ausgerüstetes Klebeband 3 so verklebt, daß bezogen auf die Mittelachse des Gutes die Klebemasse 32 außenwärts liegt. Das Klebeband 3 besteht im wesentlichen aus dem bevorzugt textilen Träger 31 und der Klebemasse 32.

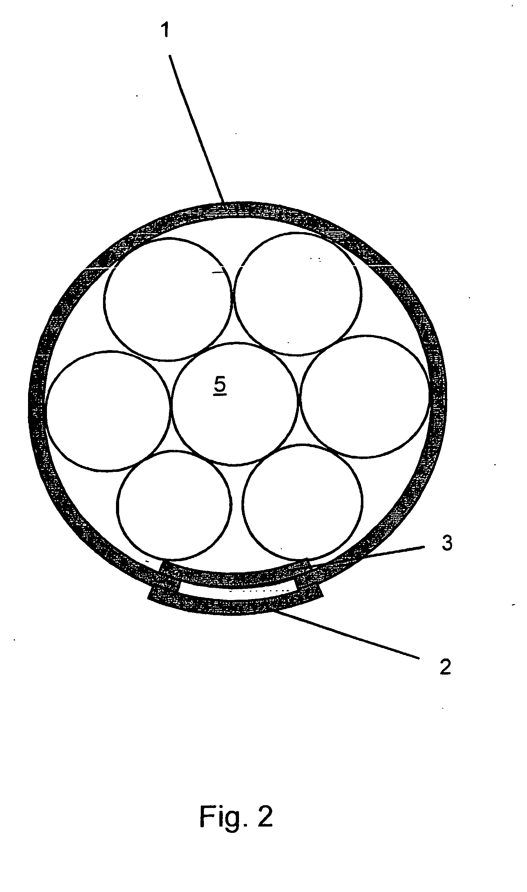

In der Figur 2 ist ein umhüllter Kabelbaum 5 gezeigt, der sich aus einzelnen Kabeln zusammensetzt, in diesem Fall sieben. Die Ummantelung des Kabelbaums 5 erfolgt so, daß die Klebemassen 32 der beiden Klebebänder 2, 3 jeweils auf der Eindeckung 1 und zu einem Teil auf sich selbst verkleben, in dem dargestellten Fall beträgt die Verklebung des Klebebandes auf der Eindeckung weniger als 50%.

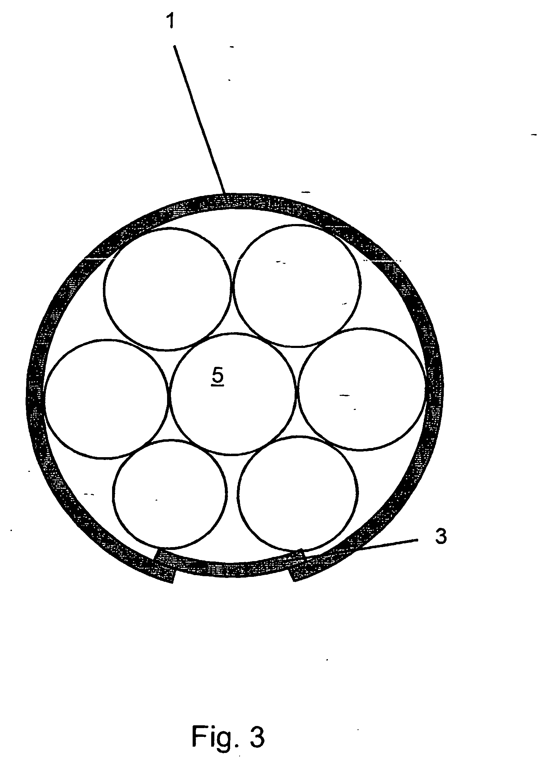

Durch Weglassen des Klebebands 2, wie es in Figur 3 dargestellt ist, besteht als weitere Ausführungsform durch einen nach außen orientierten Klebestreifen die Möglichkeit, den längsummantelten Kabelbaum an Umgebungsflächen zu fixieren, zum Beispiel an Karosserieblechen, um so ein Verrutschen, Klappern o.ä. zu verhindern.

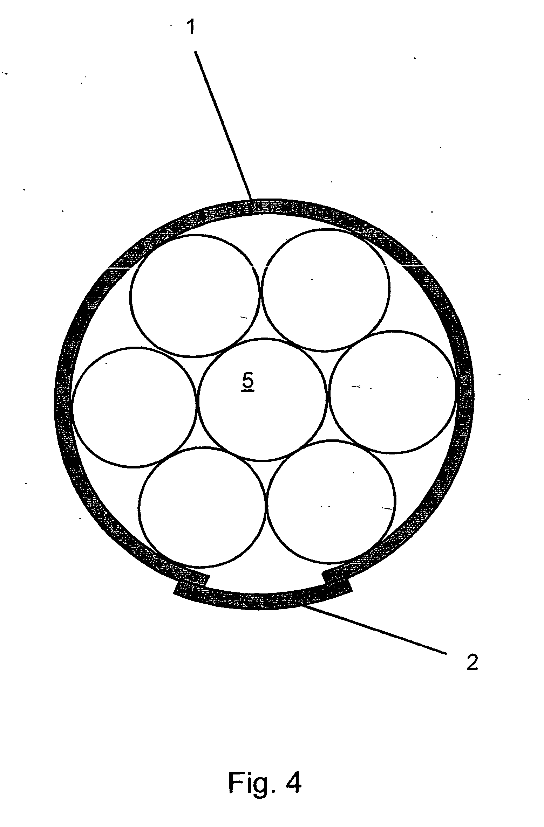

In einer weiteren gesonderten Ausprägungsform kann durch Weglassen des Klebebandes 3 (siehe Figur 4) - d.h., nur eine Kante der Eindeckung ist mit einem Klebeband versehen - ein nach innen zu dem Kabelbaum gerichteter, schmaler klebender Bereich des Klebebandes erhalten bleiben, der an einem oder mehreren Einzelkabeln des Kabelbaumes festklebt und somit die Konfiguration fixiert. Ein Verrutschen der Ummantelung wird somit weitgehend verhindert.

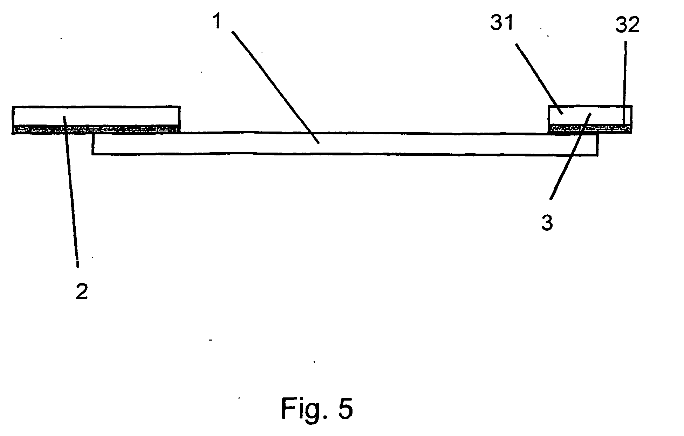

In der Figur 5 ist im Querschnitt eine zweite Ummantelung mit einer textilen Eindeckung 1 gezeigt, die zur Ummantelung von langgestrecktem Gut, insbesondere Kabelsätzen, eingesetzt werden kann.
Ein einseitig selbstklebend ausgerüstetes Klebeband 2 ist so in axialer Richtung des Gutes auf zumindest einem im Vergleich zur Breite der Eindeckung 1 schmalen Kantenbereich der Eindeckung 1 verklebt, daß bezogen auf die Mittelachse des zu ummantelnden Gutes (Kabelbaum 5) die Klebemasse innenwärts liegt. Auf dem zweiten Kantenbereich der Eindeckung 1 ist ein zweites selbstklebend ausgerüstetes Klebeband 3 so verklebt, daß bezogen auf die Mittelachse des Gutes die Klebemasse 32 ebenfalls innenwärts liegt.

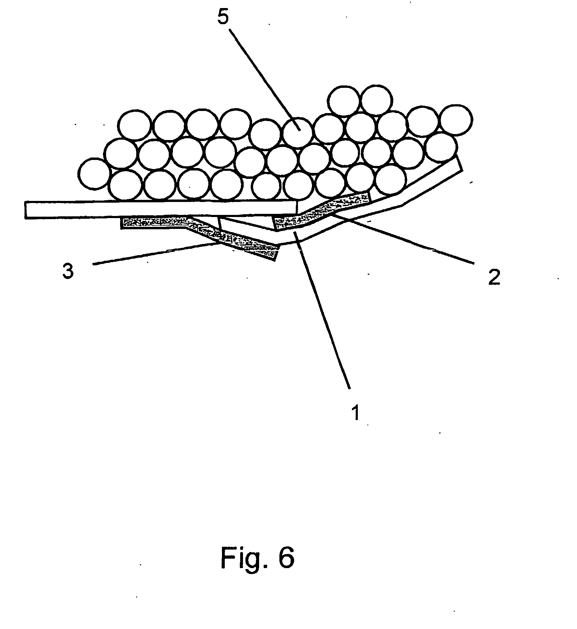

In der Figur 6 ist das mit erfindungsgemäßen Ummantelung aus Figur 5 ummantelte Gut 5 gezeigt, und zwar im besonderen der Bereich, der die Umhüllung in ihrer Lage fixiert.
Das erste Klebeband 2 dient während des Vorgangs der Ummantelung dazu, die Eindeckung 1 beziehungsweise die gesamte Ummantelung leicht auf dem Gut 5 festzulegen, so daß ein Verrutschen der Ummantelung nicht auftritt. Das erste Klebeband 2 weist eine schmalere Breite auf als das zweite Klebeband 3, das die Eindeckung 1 und somit die gesamte Ummantelung um das Gut 5 fixiert.

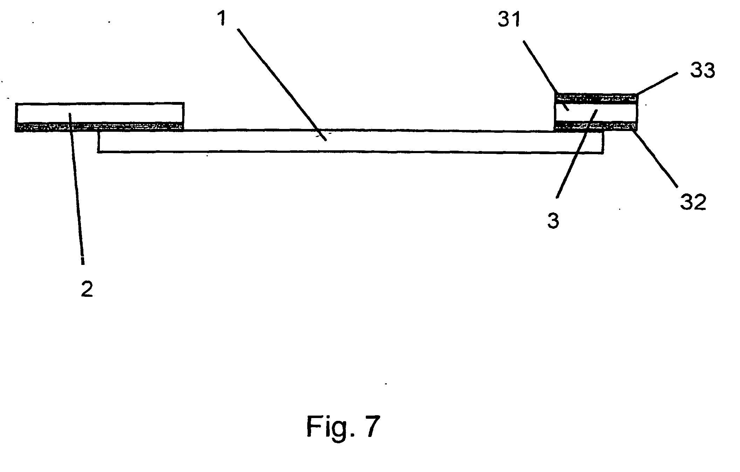

In der Figur 7 ist im Querschnitt eine weitere Ummantelung mit einer textilen Eindeckung 1 gezeigt, die zur Ummantelung von langgestrecktem Gut, insbesondere Kabelsätzen, eingesetzt werden kann.
Die Ummantelung entspricht im wesentlichen der aus Figur 5, lediglich ist auf dem zweiten Kantenbereich der Eindeckung 1 ist ein zweites selbstklebend ausgerüstetes Klebeband 3 vorhanden, das ein beidseitig selbstklebend ausgerüstetes ist, also zwei Kleberschichtungen 32, 33 aufweist.
Ansonsten besteht das Klebeband 3 im wesentlichen aus dem bevorzugt textilen Träger 31.

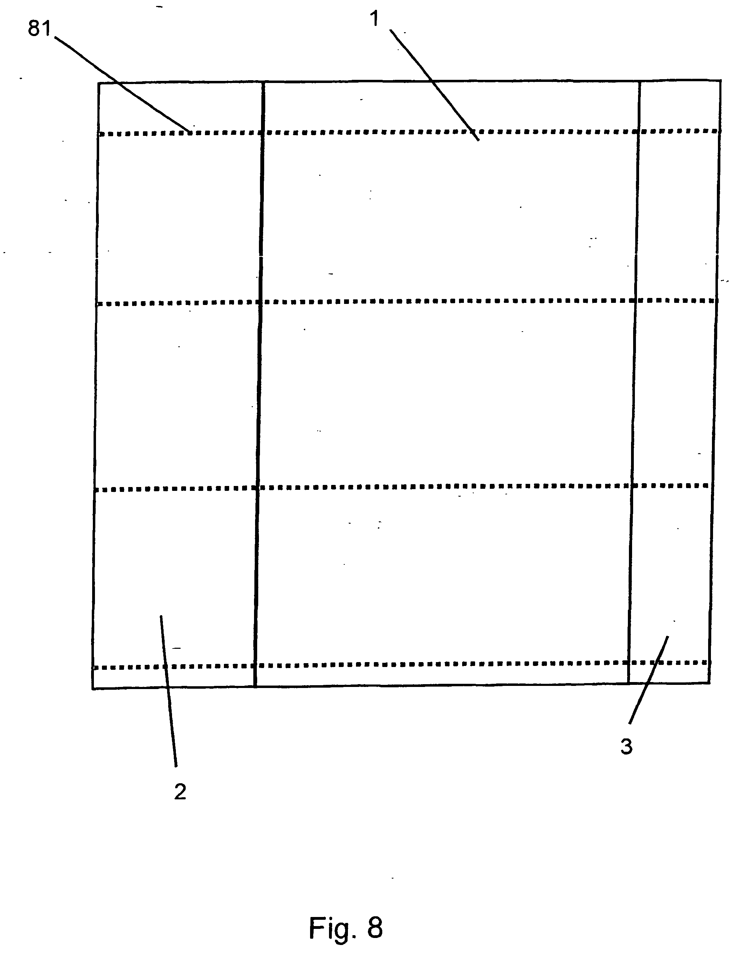

In der Figur 8 ist in der Draufsicht die zweite Ummantelung aus Figur 5 mit einer textilen Eindeckung 1 gezeigt, die zur Ummantelung von langgestrecktem Gut, insbesondere Kabelsätzen, eingesetzt werden kann.
Die Ummantelung ist durch viele in regelmäßigen Abständen angeordneten Perforationslinien 81 in gleichlange Abschnitte eingeteilt, die einfach von der Rolle der Ummantelung abgetrennt werden können.

## Patentansprüche

1. Ummantelung zum Ummanteln von langgestrecktem Gut, wie insbesondere Kabelsätzen, mit einer bevorzugt textilen Eindeckung, bei der auf zumindest einem im Vergleich zur Breite der Eindeckung schmalen Kantenbereich der Eindeckung ein selbstklebend ausgerüstetes Klebeband vorhanden ist, das so auf der Eindeckung verklebt ist, daß sich das Klebeband über eine der Längskanten der Eindeckung erstreckt, wobei die textile Eindeckung und das Klebeband im wesentlichen rechtwinklig zur Laufrichtung ein oder mehrere Schwächungslinien aufweisen, so daß die Ummantelung leichter handeinreißbar ist.

2. Ummantelung nach Anspruch 1, **dadurch gekennzeichnet, daß** auf einem im Vergleich zur Breite der Eindeckung schmalen Kantenbereich der Eindeckung ein zweites selbstklebend ausgerüstetes Klebeband vorhanden ist, das so auf der Eindeckung verklebt ist, daß sich das Klebeband über die andere der beiden Längskanten der Eindeckung erstreckt, wobei das zweite Klebeband im wesentlichen rechtwinklig zur Laufrichtung ein oder mehrere Schwächungslinien aufweist, die so vorhanden sind, daß diese deckungsgleich mit den Schwächungslinien in der textilen Eindeckung und dem ersten Klebeband angeordnet sind.

3. Ummantelung nach Anspruch 2, **dadurch gekennzeichnet, daß** die beiden Klebebänder auf der Oberseite der Eindeckung angeordnet sind.

4. Ummantelung nach Anspruch 2, **dadurch gekennzeichnet, daß** das eine Klebeband auf der Oberseite der Eindeckung und das andere Klebeband auf der Unterseite der Eindeckung angeordnet ist.

5. Ummantelung nach den Ansprüchen 1 bis 4, **dadurch gekennzeichnet, daß** als Eindeckung und/oder Trägermaterial für das Klebeband Gewebe, Gewirke oder auch Vliese verwendet werden, die insbesondere durch ein Übernähen mit separaten Fäden oder durch ein Vermaschen oder Wasserstrahlen oder Nadeln verfestigt sind.

6. Ummantelung nach den Ansprüchen 1 bis 5, **dadurch gekennzeichnet, daß** das Klebeband eine Breite von 10 bis 100 mm aufweist, insbesondere von 15 bis 50 mm.

7. Ummantelung nach zumindest einem der vorherigen Ansprüche, **dadurch gekennzeichnet, daß** sich die Schwächungslinien über die gesamte Breite des ersten Klebebands, des zweiten Klebebands und/oder der textilen Eindeckung erstrecken.

8. Ummantelung nach zumindest einem der vorherigen Ansprüche, **dadurch gekennzeichnet, daß** die Schwächungslinien rechtwinklig zur Laufrichtung der Ummantelung ausgerichtet sind.

9. Ummantelung nach zumindest einem der vorherigen Ansprüche, **dadurch gekennzeichnet, daß** die Schwächungslinien in Form von Perforationen ausgestaltet sind.

10. Ummantelung nach zumindest einem der vorherigen Ansprüche, **dadurch gekennzeichnet, daß** die Schwächungslinien in regelmäßigen Abständen angeordnet sind.

11. Ummantelung nach zumindest einem der vorherigen Ansprüche, **dadurch gekennzeichnet, daß** die Schwächungslinien unter Verwendung von Stachelwalzen oder Stanzwalzen erzeugt werden.

12. Verwendung einer Ummantelung gemäß zumindest einem der vorherigen Ansprüche zum Ummanteln von langgestrecktem Gut, wie insbesondere Kabelsätzen, mit einer textilen Eindeckung, wobei das langgestreckte Gut in axialer Richtung von der Eindeckung umhüllt wird und wobei in axialer Richtung des Gutes auf zumindest einem im Vergleich zur Breite der Eindeckung schmalen Kantenbereich der Eindeckung ein selbstklebend ausgerüstetes Klebeband vorhanden ist, das so auf der Eindeckung verklebt ist, daß sich das Klebeband über die Längskante der Eindeckung erstreckt, und die Umhüllung des Gutes mit der Eindeckung so erfolgt, daß das selbstklebend ausgerüstete Klebeband im wesentlichen auf der Eindeckung selbst verklebt, wobei die textile Eindeckung und das Klebeband im wesentlichen rechtwinklig zur Laufrichtung ein oder mehrere Schwächungslinien aufweisen, so daß die Ummantelung leichter handeinreißbar ist.

13. Verwendung nach Anspruch 12, **dadurch gekennzeichnet, daß** das einseitig selbstklebend ausgerüstete Klebeband so auf der Eindeckung verklebt ist, daß bezogen auf die Mittelachse des Gutes die Klebemasse innenwärts liegt.

14. Verwendung nach Anspruch 12, **dadurch gekennzeichnet, daß** das einseitig selbstklebend ausgerüstete Klebeband so auf der Eindeckung verklebt ist, daß bezogen auf die Mittelachse des Gutes die Klebemasse außenwärts liegt.

15. Verwendung nach den Ansprüchen 12 bis 14, **dadurch gekennzeichnet, daß** das einseitig selbstklebend ausgerüstete Klebeband so auf dem ersten Kantenbereich der Eindeckung verklebt ist, daß bezogen auf die Mittelachse des Gutes die Klebemasse innenwärts liegt, und daß ein zweites selbstklebend ausgerüstetes Klebeband so auf dem zweiten Kantenbereich der Eindeckung verklebt ist, daß bezogen auf die Mittelachse des Gutes die Klebemasse außenwärts liegt, wobei die Umhüllung des Gutes so erfolgt, daß die beiden Klebebänder jeweils auf der Eindeckung verkleben, wobei das zweite Klebeband im wesentlichen rechtwinklig zur Laufrichtung ein oder mehrere Schwächungslinien aufweist, die so vorhanden sind, daß diese deckungsgleich mit den Schwächungslinien in der textilen Eindeckung und dem ersten Klebeband angeordnet sind.

16. Verwendung nach den Ansprüchen 12 bis 15, **dadurch gekennzeichnet, daß** das einseitig selbstklebend ausgerüstete Klebeband so auf dem ersten Kantenbereich der Eindeckung verklebt ist, daß bezogen auf die Mittelachse des Gutes die Klebemasse innenwärts liegt, und daß ein zweites selbstklebend ausgerüstetes Klebeband so auf dem zweiten Kantenbereich der Eindeckung verklebt ist, daß bezogen auf die Mittelachse des Gutes die Klebemasse innenwärts liegt, wobei die Umhüllung des Gutes so erfolgt, daß das erste Klebeband auch auf dem Gut und das zweite Klebeband im wesentlichen auf der Eindeckung verklebt.

17. Verwendung nach den Ansprüchen 12 bis 16, **dadurch gekennzeichnet, daß** die Umhüllung des Gutes so erfolgt, daß die beiden Klebebänder jeweils zu einem Teil auf der Eindeckung verkleben und zu einem Teil auf sich selbst verkleben.

18. Mit einer textilen Eindeckung ummanteltes langgestrecktes Gut, wie insbesondere ein Kabelsatz, wobei das langgestreckte Gut in axialer Richtung von der Eindeckung umhüllt wird und wobei in axialer Richtung des Gutes auf zumindest einem im Vergleich zur Breite der Eindeckung schmalen Kantenbereich der Eindeckung ein selbstklebend ausgerüstetes Klebeband vorhanden ist, das so auf der Eindeckung verklebt ist, daß sich das Klebeband über die Längskante der Eindeckung erstreckt, und die Umhüllung des Gutes mit der Eindeckung so erfolgt, daß das selbstklebend ausgerüstete Klebeband im wesentlichen auf der Eindeckung selbst verklebt, wobei die textile Eindeckung und das Klebeband im wesentlichen rechtwinklig zur Laufrichtung ein oder mehrere Schwächungslinien aufweisen, so daß die Ummantelung leichter handeinreißbar ist.

## Claims

1. Wrap for wrapping elongate product, especially cable harnesses, with a preferably textile sheath, wherein there is a self-adhesive tape present on at least one edge region of the sheath that is narrow in comparison to the width of the sheath, said tape being adhered on the sheath in such a way that it extends over one of the longitudinal edges of the sheath, the textile sheath and the adhesive tape having one or more weakening lines substantially at right angles to the running direction, so that the wrap is relatively easy to tear by hand.

2. Wrap according to Claim 1, **characterized in that** on an edge region of the sheath that is narrow in comparison to the width of the sheath there is a second self-adhesive tape adhered on the sheath in such a way that it extends over the other of the two longitudinal edges of the sheath, the second adhesive tape having one or more weakening lines substantially at right angles to the running direction, said lines being arranged congruently with the weakening lines in the textile sheath and in the first adhesive tape.

3. Wrap according to Claim 2, **characterized in that** the two adhesive tapes are disposed on the top side of the sheath.

4. Wrap according to Claim 2, **characterized in that** one adhesive tape is disposed on the top side of the sheath and the other adhesive tape is disposed on the underside of the sheath.

5. Wrap according to any of Claims 1 to 4, **characterized in that** the sheath and/or backing material for the adhesive tape comprises wovens, knits or nonwovens consolidated in particular by overstitching with separate threads or by interlooping or waterjets or needles.

6. Wrap according to any of Claims 1 to 5, **characterized in that** the adhesive tape has a width of from 10 to 100 mm, in particular from 15 to 50 mm.

7. Wrap according to at least one of the preceding claims, **characterized in that** the weakening lines extend over the entire width of the first adhesive tape, of the second adhesive tape and/or of the textile sheath.

8. Wrap according to at least one of the preceding claims, **characterized in that** the weakening lines are aligned at right angles to the running direction of the wrap.

9. Wrap according to at least one of the preceding claims, **characterized in that** the weakening lines are configured in the form of perforations.

10. Wrap according to at least one of the preceding claims, **characterized in that** the weakening lines are disposed at regular intervals.

11. Wrap according to at least one of the preceding claims, **characterized in that** the weakening lines are produced using spiked rollers or punch rollers.

12. Use of a wrap according to at least one of the preceding claims for wrapping elongate product, especially cable harnesses, with a textile sheath, the elongate product being enveloped by the sheath in the axial direction and there being a self-adhesive tape present on at least one edge region of the sheath that is narrow in comparison to the width of the sheath, in the axial direction of the product, the adhesive tape being adhered on the sheath in such a way that it extends over the longitudinal edge of the sheath, and enveloping of the product with the sheath takes place in such a way that the self-adhesive tape adheres substantially to the sheath itself, where the textile sheath and the adhesive tape comprise, substantially at right angles to the running direction, one or more weakening lines, so that the wrap is relatively easy to tear by hand.

13. Use according to Claim 12, **characterized in that** the single-sidedly self-adhesive tape is adhered on the sheath in such a way that the adhesive is on the inside relative to the centre axis of the product.

14. Use according to Claim 12, **characterized in that** the single-sidedly self-adhesive tape is adhered on the sheath in such a way that the adhesive is on the outside relative to the centre axis of the product.

15. Use according to any of Claims 12 to 14, **characterized in that** the single-sidedly self-adhesive tape is adhered on the first edge region of the sheath in such a way that the adhesive is on the inside relative to the centre axis of the product, and **in that** a second self-adhesive tape is adhered on the second edge region of the sheath in such a way that the adhesive is on the outside relative to the centre axis of the product, the enveloping of the product taking place in such a way that the two adhesive tapes each adhere to the sheath, the second adhesive tape having, substantially at right angles to the running direction, one or more weakening lines disposed so as to be congruent with the weakening lines in the textile sheath and in the first adhesive tape.

16. Use according to any of Claims 12 to 15, **characterized in that** the single-sidedly self-adhesive tape is adhered on the first edge region of the sheath in such a way that the adhesive is on the inside relative to the centre axis of the product and **in that** a second self-adhesive tape is adhered on the second edge region of the sheath in such a way that the adhesive is on the inside relative to the centre axis of the product, the enveloping of the product taking place in such a way that the first adhesive tape also adheres to the product and the second adhesive tape adheres substantially to the sheath.

17. Use according to any of Claims 12 to 16, **characterized in that** the product is enveloped in such a way that the two adhesive tapes each adhere partly to the sheath and partly to themselves.

18. Elongate product, especially a cable harness, wrapped with a textile sheath, the elongate product being enveloped by the sheath in the axial direction and there being a self-adhesive tape present on at least one edge region of the sheath that is narrow in comparison to the width of the sheath, in the axial direction of the product, the adhesive tape being adhered to the sheath in such a way that it extends over the longitudinal edge of the sheath, the product being enveloped with the sheath in such a way that the self-adhesive tape adheres substantially on the sheath itself, where the textile sheath and the adhesive tape comprise, substantially at right angles to the running direction, one or more weakening lines, so that the wrap is relatively easy to tear by hand.

## Revendications

1. Enveloppe destinée à envelopper un produit long, en particulier un jeu de câbles, et qui présente un recouvrement de préférence textile et dans laquelle sur au moins une zone de bord du recouvrement plus étroite que la largeur du recouvrement est prévu un ruban adhésif rendu autocollant qui est collé sur le recouvrement de telle sorte que le ruban adhésif s'étende au-dessus d'un des bords longitudinaux du recouvrement, le recouvrement textile et le ruban adhésif présentant une ou plusieurs lignes d'affaiblissement essentiellement perpendiculaires à la direction d'avancement, de sorte que l'enveloppe est plus facile à déchirer à la main.

2. Enveloppe selon la revendication 1, **caractérisée en ce qu'**un deuxième ruban adhésif rendu autocollant est prévu sur une zone de bord du recouvrement plus étroite que la largeur du recouvrement et est collé sur le recouvrement de telle sorte que le ruban adhésif s'étende au-dessus de l'autre des deux côtés longitudinaux du recouvrement, le deuxième ruban adhésif présentant une ou plusieurs lignes d'affaiblissement essentiellement perpendiculaires à la direction d'avancement et prévues de manière à recouvrir les lignes d'affaiblissement ménagées dans le recouvrement textile et dans le premier ruban adhésif.

3. Enveloppe selon la revendication 2, **caractérisée en ce que** les deux rubans adhésifs sont disposés sur le côté supérieur du recouvrement.

4. Enveloppe selon la revendication 2, **caractérisée en ce qu'**un des rubans adhésifs est disposé sur le côté supérieur du recouvrement et l'autre ruban adhésif sur le côté inférieur du recouvrement.

5. Enveloppe selon les revendications 1 à 4, **caractérisée en ce que** comme recouvrement et/ou comme matériau de support pour le ruban adhésif, on utilise des tissus, des tricots ou également des non-tissés qui ont été solidifiés en particulier par couture de fils séparés, par maillage, par jets d'eau ou par aiguilletage.

6. Enveloppe selon les revendications 1 à 5, **caractérisée en ce que** le ruban adhésif a une largeur de 10 à 100 mm et en particulier de 15 à 50 mm.

7. Enveloppe selon au moins l'une quelconque des revendications précédentes, **caractérisée en ce que** les lignes d'affaiblissement s'étendent sur toute la largeur du premier ruban adhésif, du deuxième ruban adhésif et/ou du recouvrement textile.

8. Enveloppe selon au moins l'une quelconque des revendications précédentes, **caractérisée en ce que** les lignes d'affaiblissement sont orientées perpendiculairement à la direction d'avancement de l'enveloppe.

9. Enveloppe selon au moins l'une quelconque des revendications précédentes, **caractérisée en ce que** les lignes d'affaiblissement sont configurées en forme de perforations.

10. Enveloppe selon au moins l'une quelconque des revendications précédentes, **caractérisée en ce que** les lignes d'affaiblissement sont disposées à intervalles réguliers.

11. Enveloppe selon au moins l'une quelconque des revendications précédentes, **caractérisée en ce que** les lignes d'affaiblissement sont créées en recourant à des cylindres à ergots ou à des cylindres d'estampage.

12. Utilisation d'une enveloppe selon au moins l'une quelconque des revendications précédentes pour envelopper un produit long, en particulier des jeux de câbles, par un recouvrement textile, le produit long étant entouré dans la direction axiale par le recouvrement et un ruban adhésif rendu autocollant étant prévu dans la direction axiale du produit sur au moins une zone de bord du recouvrement plus étroite que la largeur du recouvrement et étant collé sur le recouvrement de telle sorte que le ruban adhésif s'étende au-dessus du bord longitudinal du recouvrement, l'enveloppement du produit par le recouvrement s'effectuant de telle sorte que le ruban adhésif rendu autocollant soit collé essentiellement sur le recouvrement proprement dit, le recouvrement textile et le ruban adhésif présentant une ou plusieurs lignes d'affaiblissement essentiellement perpendiculaires la direction d'avancement, de sorte que l'enveloppe est plus facile à déchirer à la main.

13. Utilisation selon la revendication 12, **caractérisée en ce que** le ruban adhésif rendu autocollant sur une face est collé sur le recouvrement de telle sorte que la pâte adhésive soit située à l'intérieur par rapport à l'axe central du produit.

14. Utilisation selon la revendication 12, **caractérisée en ce que** le ruban adhésif rendu autocollant sur une face est collé sur le recouvrement de telle sorte que la pâte adhésive soit située à l'extérieur par rapport à l'axe central du produit.

15. Utilisation selon les revendications 12 à 14, **caractérisée en ce que** le ruban adhésif rendu autocollant sur une face est collé sur la première zone de bord du recouvrement de telle sorte que la pâte adhésive soit située à l'intérieur par rapport à l'axe central du produit, et **en ce qu'**un deuxième ruban adhésif rendu autocollant est collé sur la deuxième zone de bord du recouvrement de telle sorte que la pâte adhésive soit située à l'extérieur par rapport à l'axe central du produit, l'enveloppement du produit s'effectuant de telle sorte que les deux rubans adhésifs soient tous deux collés sur le recouvrement, le deuxième ruban adhésif présentant une ou plusieurs lignes d'affaiblissement essentiellement perpendiculaires à la direction d'avancement et prévues de telle sorte qu'elles recouvrent les lignes d'affaiblissement ménagées dans le recouvrement textile et dans le premier ruban adhésif.

16. Utilisation selon les revendications 12 à 15, **caractérisée en ce que** le ruban adhésif rendu autocollant sur une face est collé sur la première zone de bord du recouvrement de telle sorte que la pâte adhésive soit située à l'intérieur par rapport à l'axe central du produit, et **en ce qu'**un deuxième ruban adhésif rendu autocollant est collé sur la deuxième zone de bord du recouvrement de telle sorte que la pâte adhésive soit située à l'intérieur par rapport à l'axe central du produit, l'enveloppement du produit s'effectuant de telle sorte que le premier ruban adhésif adhère également au produit et que le deuxième ruban adhésif adhère essentiellement au recouvrement.

17. Utilisation selon les revendications 12 à 16, **caractérisée en ce que** l'enveloppement du produit s'effectue de telle sorte qu'une partie des deux rubans adhésifs adhère au recouvrement et qu'une autre partie adhère sur les rubans adhésifs.

18. Produit long, en particulier jeu de câbles, enveloppé dans un recouvrement textile, le produit long étant enveloppé par le recouvrement dans sa direction axiale, un ruban adhésif rendu autocollant étant prévu dans la direction axiale du produit sur au moins une zone de bord du recouvrement plus étroite que la largeur du recouvrement et étant collé sur le recouvrement de telle sorte que le ruban adhésif s'étende au-dessus du bord longitudinal du recouvrement, l'enveloppement du produit par le recouvrement s'effectuant de telle sorte que le ruban adhésif rendu autocollant adhère essentiellement au recouvrement proprement dit, le recouvrement textile et le ruban adhésif présentant une ou plusieurs lignes d'affaiblissement essentiellement perpendiculaires à la direction d'avancement de telle sorte que l'enveloppe est plus facile à déchirer à la main.
